# EUROPÄISCHE PATENTANMELDUNG

(11) **EP 1 579 895 A1**
(43) Veröffentlichungstag der Anmeldung: **28.09.2005**
(21) Anmeldenummer: 04007212.6
(22) Anmeldetag: 25.03.2004
(51) Int. Cl.: A63F 13/12

(54) **Verfahren zur gemeinsamen Benutzung von Software und informationstechnisches Gerät zur Durchführung des Verfahrens**

(71) Anmelder: SIEMENS AKTIENGESELLSCHAFT, 80333 München (DE)
(72) Erfinder: Präg, Angela, 81545 München (DE); Zechlin, Oliver, 81825 München (DE)

(57) **Zusammenfassung**

Auf einem ersten Gerät (D1) läuft ein erster Softwarebaustein (S1), z.B. ein Spiel für zwei Spieler, der zuvor über eine drahtlose Kommunikationsschnittstelle (Tl, T2) oder auf anderem Wege auf das erste Gerät übertragen wurde. Dieser erste Softwarebaustein (S1) prüft (V) mit Hilfe einer Kommunikationsverbindung von Zeit zu Zeit während seines Ablaufs auf dem ersten Gerät, mindestens jedoch einmal nach jedem Start, ob derzeit auf einem anderen Gerät (D2) ein zweiter Softwarebaustein (S2) abläuft, dessen gleichzeitiger Ablauf zum bestimmungsgemäßen oder rechtmäßigen Ablauf des ersten Softwarebausteins auf dem ersten Gerät erforderlich ist.

## Beschreibung

Digitale Spiele, sogenannte Computer-Spiele werden heute zunehmend auf Mobiltelefonen und anderen informationstechnischen Geräten wie z.B. Organizern, PDAs, Notebooks und ähnlichen Geräten gespielt. Viele dieser Geräte verfügen über Einrichtungen zur drahtlosen Kommunikation, wie z.B. integrierte GSM-Module, Infrarot-, Bluetooth oder WLAN-Module, die eine einfache Kommunikation mit anderen Geräten, direkt oder über ein Kommunikationsnetzwerk, ermöglichen.

Durch diese Entwicklung findet Spiele-Software für zwei oder mehr Mitspieler zunehmend Verbreitung. Dabei läuft auf jedem der beteiligten Geräte ein entsprechender Softwarebaustein, wobei diese Softwarebausteine so untereinander kommunizieren, dass ein gemeinsames Spiel möglich wird.

Für die Benutzer solcher Spiele ist es daher wünschenswert, dass möglichst viele Besitzer von derartigen Geräten über einen zum Ablauf eines solchen Spiels erforderlichen Softwarebaustein verfügen, oder dass es - wenn ein solcher bei einem potentiellen Spielpartner gerade nicht vorhanden ist, wenigstens auf technisch einfache und gleichzeitig rechtmäßige Weise möglich ist, diesem potentiellen Spielpartner die Möglichkeit zum mitspielen zu verschaffen.

Ein einfaches Kopieren der entsprechenden Softwarebausteine zwischen den beteiligten Benutzern stößt aber auf technische oder rechtliche Probleme, weil anderes die Rechte der Hersteller solcher Spiele-Softwarebausteine nicht gewahrt werden können.

Diese Situation sucht die vorliegende Erfindung zu verbessern. Außerdem strebt die Erfindung eine Verbesserung der Umstände in ähnlichen Fällen an, in denen eine Software innerhalb einer Gruppe von informationstechnischen Geräten mit jeweils mindestens einer Einrichtung zur drahtlosen Kommunikation mit einem anderen Gerät dieser Gruppe gemeinsam von mehreren Anwendern benutzt werden soll. Dabei muss es sich nicht immer um Spiele handeln, sondern es sind auch andere Anwendungen denkbar, z.B. die gemeinsame Arbeit an einem gemeinsam zu erstellenden Dokument, oder ähnliches. Diese Aufgabe wird durch ein Verfahren bzw. durch ein Erzeugnis nach einem der Patentansprüche gelöst.

Im folgenden wird die Erfindung anhand bevorzugter Ausführungsbeispiele und mit Hilfe von Figuren näher beschrieben.

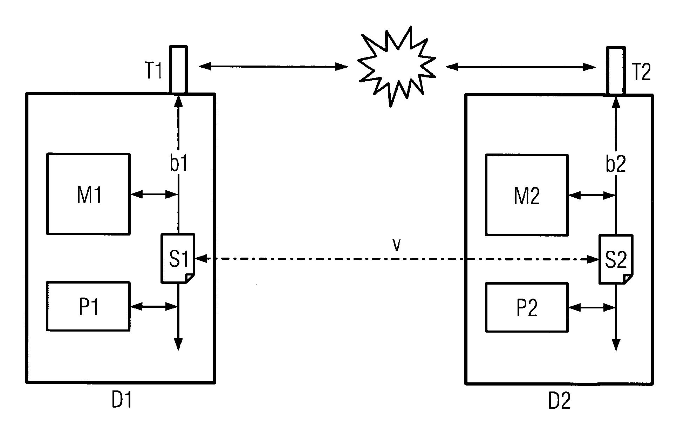

Dabei zeigt
Fig. 1 in schematischer Weise ein Ausführungsbeispiel der Erfindung, bei dem die Benutzer zweier Geräte gemeinsam eine Software verwenden.

Wie in Figur 1 gezeigt wird, besteht in diesem Beispiel die Gruppe aus zwei informationstechnischen Geräten (D1, D2) mit jeweils mindestens einer Einrichtung (T1, T2) zur drahtlosen Kommunikation mit einem anderen Gerät dieser Gruppe.

Bei diesen informationstechnischen Geräten kann es sich um Computer, Mobiltelefone, oder ähnliche Geräte handeln, die über eine Einrichtung (T1, T2) zur drahtlosen Kommunikation mit einem anderen Gerät dieser Gruppe verfügen. Im Falle eines Mobiltelefons wird das häufig die GSM-Luftschnittstelle sein, oder eine Infrarotschnittstelle oder eine sogenannte Bluetooth-Schnittstelle. Die physikalische Natur dieser Schnittstellen und die technischen Einrichtungen zu deren Realisierung sind für die Erfindung nur insoweit von Belang, als diese Schnittstellen sich zur Übertragung der zur Ausführung der Erfindung jeweils benötigten Informationen (z.B. Softwarebausteine, Nachrichten, Befehle, etc.) eignen müssen.

Derartige Schnittstellen und Einrichtungen sind dem Fachmann in verschiedener Art bekannt und müssen daher hier nicht näher beschrieben werden.

Auf dem ersten Gerät (D1) ist ein erster Softwarebaustein (S1) gespeichert, der auf einem Prozessor (P1) dieses ersten Gerätes zum Ablauf gebracht wird.

Typische Beispiele solcher Softwarebausteine im Sinne der vorliegenden Erfindung sind Computer-Spiele die von mehreren Spielern gleichzeitig miteinander oder gegeneinander gespielt werden können, also sogenannte mehrspielertaugliche Spiele.

Zuvor wurde dieser Softwarebaustein (S1) über die drahtlose Kommunikationsschnittstelle (T1, T2) oder auf anderem Wege von einem anderen Gerät dieser Gruppe (D2) oder über ein Kommunikationsnetzwerk von einem Server oder von einem externen Speichermedium auf das erste Gerät (D1) übertragen.

Die Übertragung des Softwarebausteins kann also von einem Gerät der Gruppe auf ein anderes oder auf anderem Wege erfolgen, z.B. durch Download von einem Server oder von einem externen Speichermedium, wie z.B. eine Chipkarte mit Speicherbaustein (sogenannte Memory Card), die z.B. in eine dafür geeignete Leseeinrichtung des Gerätes eingeschoben wird. Der Server kann ein Computer in einem Mobilfunknetz sein, auf dem z.B. Computerspiele zum Download bereitgestellt werden.

Dabei prüft (v) dieser erste Softwarebaustein (S1) mit Hilfe einer Kommunikationsverbindung über die Kommunikationsschnittstelle von Zeit zu Zeit während seines Ablaufs auf dem ersten Gerät, mindestens jedoch einmal nach jedem Start, ob derzeit auf einem Prozessor (P2) mindestens eines anderen Gerätes (D2) der Gruppe ein zweiter Softwarebaustein (S2) abläuft, dessen gleichzeitiger Ablauf zum bestimmungsgemäßen oder rechtmäßigen Ablauf des ersten Softwarebausteins (S1) auf dem ersten Gerät (D1) erforderlich ist.

Die vorliegende Erfindung geht davon aus, dass zur Benutzung des Softwarebausteins eine Berechtigung erforderlich ist. Deshalb sieht die Erfindung vor, dass dem Benutzer des ersten Gerätes der eigentliche Gebrauch dieses Softwarebausteins nur möglich sein soll, wenn dieser seine Berechtigung zum Gebrauch nachweisen kann. Die Erfindung geht von der Annahme aus, dass die Berechtigung des Benutzers des ersten Gerätes zum Gebrauch des Softwarebausteins davon abhängt, ob er diesen Softwarebaustein gemeinsam mit einem Benutzer eines anderen Gerätes der Gruppe verwendet, dessen Berechtigung vorausgesetzt oder auf andere Weise geprüft wird oder geprüft wurde, d.h. im Beispiel der Spiele-Software, ob der erste Spieler das Spiel gemeinsam mit einem zweiten Spieler spielt, der dazu die Berechtigung hat.

Diese Vorgehensweise zur Prüfung der Berechtigung es ersten Spielers hat den Vorteil, dass der zweite Spieler sehr leicht einen Mitspieler finden kann. Er muss dazu nur einen Benutzer eines Gerätes der Gruppe finden. Die Gruppe umfasst im Idealfall die Menge aller Geräte, auf denen der Softwarebaustein überhaupt ablauffähig ist, also z.B. die Menge aller Mobiltelefone oder Notebooks mit WLAN-Schnittstelle, die mit einem bestimmten Prozessortyp und/oder mit einer bestimmten Betriebssoftware ausgestattet sind, die den Ablauf des Spielprogramms ermöglichen. Die Zahl dieser Menschen ist in aller Regel viel größer als die Zahl der rechtmäßigen Besitzer einer Kopie des Spielprogramms. Deshalb wird auch die Wahrscheinlichkeit, in einer gegebenen Situation eines Mitspieler zu finden, wesentlich höher, wenn der Mitspieler nicht nur unter allen rechtmäßigen Besitzer einer Kopie des Spielprogramms sondern unter allen Besitzern eines Gerätes der Gruppe gesucht werden kann.

Dass die zum Mitspielen bereite Person dann in vielen Fällen keine Kopie der Spielsoftware hat oder zur Benutzung einer solchen Kopie allein nicht berechtigt wäre, ist durch die Maßnahmen der Erfindung nicht länger ein Problem, denn die Kopie kann sich die zum Mitspielen bereite Person leicht beschaffen. Gemäß einer Ausführungsform der Erfindung wird die Kopie im Bedarfsfall von einem anderen gerät der Gruppe auf das Gerät der zum Mitspielen bereiten Person übertragen.

Auch aus der Sicht der Softwareentwickler bzw. der Rechtsinhaber der jeweiligen (Urheber)rechte ist es ein großer Vorteil der Erfindung, dass die zahl der Spieler (allgemein: der Benutzer) nun wesentlich größer sein kann als die Zahl der selbständigen Lizenzinhaber. Es ist ja durch die Erfindung immer sicher gestellt, dass zumindest ein Mitspieler eine Lizenz genommen hat oder jedenfalls über eine selbständige Berechtigung verfügt und zur Vergabe von Mitspielrechten unter der Bedingung berechtigt ist, dass er selbst unter den Mitspieler ist. Die Rechtsinhaber müssen ihr jeweiliges Lizenzvergabemodell nur geeignet gestalten, um sicherzustellen, dass sie auf diese Weise keine geringeren Einnahmen haben werden als auf herkömmliche Weise. Es spricht jedenfalls viel dafür, dass der Kreis der selbständig Berechtigten nach dem Modell der Erfindung schneller wachsen dürfte als bei herkömmlicher Lizenzvergabe, u.a., weil die Möglichkeit des Mitspielens noch nicht Berechtigter eine erhebliche Werbewirkung entfalten wird und die selbständige Lizenznahme dieser noch nicht selbständig Berechtigten eher fördern wird, weil diese nach selbständiger Lizenznahme wiederum freier in der Auswahl ihrer Mitspieler sind.

Die Erfindung schlägt als technische Maßnahme dazu vor, den ersten Softwarebaustein so auszuführen, dass er mit Hilfe einer Kommunikationsverbindung über die Kommunikationsschnittstelle von Zeit zu Zeit während seines Ablaufs auf dem ersten Gerät, mindestens jedoch einmal nach jedem Start, prüft, ob derzeit auf einem Prozessor (P2) mindestens eines anderen Gerätes (D2) der Gruppe ein zweiter Softwarebaustein (S2) abläuft, dessen gleichzeitiger Ablauf zum bestimmungsgemäßen oder rechtmäßigen Ablauf des ersten Softwarebausteins (S1) auf dem ersten Gerät (D1) erforderlich ist.

Das bedeutet am Beispiel der Spielprogramme, dass das Spielprogramm des noch nicht selbständig berechtigten Mitspielers einen Code enthält, der das Gerät, auf dem das Programm abläuft, veranlasst, dem Gerät des bzw. eines selbständig berechtigten Mitspielers eine Nachricht zu schicken, die das Spielprogramm des selbständig berechtigten Mitspielers in geeigneter Weise beantworten muss, weil andernfalls das Spielprogramm des noch nicht selbständig berechtigten Mitspielers das Spiel abbricht oder zumindest die vollumfängliche Nutzung des Spiels durch den noch nicht selbständig berechtigten Mitspieler verhindert, z.B. indem diesem dann bestimmte "Ebenen" des Spiels nicht zugänglich gemacht werden.

Dem Fachmann erschließen sich anhand der vorliegenden Beschreibung vielfältige, naheliegende Möglichkeiten, diese grundlegende Idee zu realisieren, die hier aber nicht alle beschrieben werden können. Beispielsweise können der erste und der zweite Softwarebaustein exakte Kopien von einander sein, oder es können Unterschiede im Code (Master/Client) bestehen. Im ersten Fall müsste die selbständige Berechtigung mindestens eines Mitspielers sich auf andere Weise als aus dem Code seins Spielprogramms ergeben, beispielsweise aus einem elektronischen Zertifikat, also aus einer Datei, die auf dem Gerät dieses selbständig berechtigten Benutzers gespeichert ist, oder durch Abfrage seiner Berechtigung im Mobilfunknetz anhand seiner Gerätenummer, z.B. anhand seiner IMEI, oder ähnlichem.

Entscheidend für die Erfindung ist, dass der Softwarebaustein des noch nicht selbständig berechtigten Mitspielers nicht eigenständig ablauffähig ist, sondern zum (vollumfänglichen) Ablauf von einem Mitspieler abhängig ist, der selbständig zur Benutzung der Software und zur Vergabe von Mitspielrechten berechtigt ist. Es wird im allgemeinen vorteilhaft sein, den nicht selbständig ablauffähigen Softwarebaustein nicht gegen Weitergabe durch kopieren technisch zu schützen, weil dessen Weitergabe ja durchaus im Interesse der Rechtsinhaber liegt. Ein Schutz der selbständig ablauffähigen Software des selbständig berechtigten Spielers gegen Weitergabe durch Kopieren ist dagegen in vielen Fällen aus Sicht der Rechtsinhaber wünschenswert.

Zur Durchführung der Prüfung, ob eine selbständig berechtigter Mitspieler mitspielt, eignet sich eine drahtlose Kommunikationsschnittstelle, in besonderer Weise sind Nahbereichsverbindungen wie Infrarot oder Bluetooth geeignet, die zum Aufbau sogenannter Personal Area Networks geeignet sind. Beim Spielen über größere Distanzen kommen natürlich auch Verbindungen über GSM, WLAN oder andere Technologien in Betracht.

Zum Schluß der Beschreibung soll ein beispielhaftes Szenario beschrieben werden, dass den Nutzen der Erfindung anschaulich verdeutlicht.

Der Benutzer A eines Gerätes A startet ein Spiel auf seinem Gerät, das er mit mindestens einem weiteren Mitspieler spielen möchte. Die Anwendung sucht nach passenden Spielern im Bereich seines Personal Area Networks. Selbständig berechtigte Mitspieler werden dabei nicht gefunden. Die Suche ergibt aber - oder A sieht es selbst - , dass sich im Bereich des Personal Area Networks der Benutzer B des Gerätes B aufhält, auf dessen Gerät das Spiel ebenfalls ablauffähig wäre. Benutzer B zeigt sich auf Anfrage - persönlich oder über das Netz - bereit, einer Übertagung der Spielsoftware auf sein Gerät zuzustimmen.

Benutzer A überträgt daraufhin einen zum Mitspiel erforderlichen Softwarebaustein auf das Berät B und dieser Softwarebaustein wird dort zum Ablauf gebracht. Der auf dem Gerät B ablaufende Softwarebaustein prüft daraufhin, ob der Benutzer B das Spiel mitspielt und ob B zur Vergabe von Mitspielrechten an A berechtigt ist. Dazu werden Nachrichten und/oder Befehle nach einem geeigneten Protokoll über die zwischen A und B bestehende drahtlose Kommunikationsverbindung geschickt. Das Protokoll könnte z.B. nach einem sogenannten "Challenge and Response"-Prinzip arbeiten, bei dem die beteiligten Softwarebausteine sich gegenseitig "Fragen" stellen, die der jeweils andere Softwarebaustein beantworten muss, woraufhin die "Antwort" vom fragenden Softwarebaustein geprüft wird. Die Prüfung besteht letztlich darin, zu ermitteln, ob "Frage" und "Antwort" - beide sind digital kodierte Nachrichten - im Sinne eines definierten Kriteriums zu einander passen. Entsprechende Verfahren sind dem Fachmann in großer Zahl bekannt. Fällt die Prüfung erfolgreich aus, können A und B das Spiel zusammen spielen.

Zur Darstellung der Erfindung mit Hilfe von Figuren wurden folgende Bezugszeichen verwendet:
- T1, T2: Einrichtungen zur drahtlosen Kommunikation
- B1, b2: Einrichtung zur geräteinternen Datenkommunikation, Datenbus o.ä.
- S1, S2: Softwarebausteine
- D1, D2: informationstechnische Geräte
- M1, M2: Speichereinrichtungen in einem Gerät
- P1, P2: Prozessoren in einem Gerät
- V: Prüfvorgang

## Patentansprüche

1. Verfahren zur gemeinsamen Benutzung von Software (S1, S2) innerhalb einer Gruppe von mindestens zwei informationstechnischen Geräten (D1, D2) mit jeweils mindestens einer Einrichtung (T1, T2) zur drahtlosen Kommunikation mit einem anderen Gerät dieser Gruppe, bei dem
a) auf einem ersten Gerät (D1) ein erster Softwarebaustein (S1) gespeichert ist und auf einem Prozessor (P1) dieses ersten Geräts zum Ablauf gebracht wird, der
b) zuvor über die drahtlose Kommunikationsschnittstelle (T1, T2) oder auf anderem Wege
c) von einem anderen Gerät dieser Gruppe (D2) oder
d) über ein Kommunikationsnetzwerk von einem Server oder
e) von einem externen Speichermedium
f) auf das erste Gerät (D1) übertragen wurde, und wobei
g) dieser erste Softwarebaustein (S1) mit Hilfe einer Kommunikationsverbindung über die Kommunikationsschnittstelle von Zeit zu Zeit während seines Ablaufs auf dem ersten Gerät, mindestens jedoch einmal nach jedem Start prüft (v), ob derzeit
h) auf einem Prozessor (P2) mindestens eines anderen Gerätes (D2) der Gruppe ein zweiter Softwarebaustein (S2) abläuft, dessen gleichzeitiger Ablauf zum bestimmungsgemäßen oder rechtmäßigen Ablauf des ersten Softwarebausteins (S1) auf dem ersten Gerät (D1) erforderlich ist.

2. Verfahren nach Anspruch 1, bei dem der zweite Softwarebaustein (S2) vom Benutzer des zweiten Gerätes (D2) so eingerichtet werden kann, dass er nach einem Start mit Hilfe der Kommunikationsschnittstelle zunächst prüft,
a) ob eine Kommunikation mit einem anderen Gerät (D1) der Gruppe möglich ist
b) ob der Benutzer dieses anderen Gerätes (D1) zu einer gemeinsamen Benutzung der Software bereit ist, und sofern diese Bedingung erfüllt ist, falls erforderlich eine Kopie des ersten Softwarebausteins (S1) auf das andere Gerät überträgt.

3. Informationstechnisches Gerät (D1) innerhalb einer Gruppe von mindestens zwei informationstechnischen Geräten (D1, D2) mit jeweils
a) mindestens einer Einrichtung zur drahtlosen Kommunikation (T1, T2) mit einem anderen Gerät dieser Gruppe,
b) einem Prozessor (P1) und
c) einer internen Speichereinrichtung (M1), in der ein erster Softwarebaustein (S1) gespeichert ist, der
d) auf dem Prozessor (P1) zum Ablauf gebracht werden kann und
e) mit Hilfe einer Kommunikationsverbindung über die Kommunikationsschnittstelle von Zeit zu Zeit während seines Ablaufs auf dem ersten Gerät, mindestens jedoch einmal nach jedem Start prüft (v), ob derzeit
f) auf einem Prozessor (P2) mindestens eines anderen Gerätes (D2) der Gruppe ein zweiter Softwarebaustein (S2) abläuft, dessen gleichzeitiger Ablauf zum bestimmungsgemäßen oder rechtmäßigen Ablauf des ersten Softwarebausteins (S1) auf dem ersten Gerät (D1) erforderlich ist.

4. Informationstechnisches Gerät (D2) innerhalb einer Gruppe von mindestens zwei informationstechnischen Geräten (D1, D2) mit jeweils
a) mindestens einer Einrichtung zur drahtlosen Kommunikation (T1, T2) mit einem anderen Gerät dieser Gruppe,
b) einem Prozessor (P2) und
c) einer internen Speichereinrichtung (M2), in der ein zweiter Softwarebaustein (S2) gespeichert ist, der
d) auf dem Prozessor (P2) zum Ablauf gebracht werden kann und
e) der nach einem Start mit Hilfe der Kommunikationsschnittstelle zunächst prüft,
f) ob eine Kommunikation mit einem anderen Gerät (D1) der Gruppe möglich ist
g) ob der Benutzer dieses anderen Gerätes zu einer gemeinsamen Benutzung der Software bereit ist, und sofern diese Bedingung erfüllt ist, falls erforderlich eine Kopie (S1) des ersten Softwarebausteins auf das andere Gerät (D1) überträgt.
